# EUROPÄISCHE PATENTANMELDUNG

(11) **EP 1 362 947 A2**
(43) Veröffentlichungstag der Anmeldung: **19.11.2003**
(21) Anmeldenummer: 03011212.2
(22) Anmeldetag: 16.05.2003
(51) Int. Cl.: D06N 7/00, E04F 15/02, A47G 27/02

(54) **Teppichbodenbelagselement**

(30) Priorität: 16.05.2002 DE 20207844 U
(71) Anmelder: Anker-Teppichboden Gebr. Schoeller GmbH & Co.KG, 52353 Düren (DE)
(72) Erfinder: Arbeiter, Aribert, 50997 Köln (DE)
(74) Vertreter: Schmetz, Bruno, Dipl.-Ing.

(57) **Zusammenfassung**

Das erfindungsgemäße Teppichbodenbelagselement besitzt eine im wesentlich rechteckförmige Trägerplatte, an deren Oberseite eine entsprechend bemessene Teppichware befestigt ist. Wenigstens zwei parallel gegenüberliegende Seitenränder der Trägerplatte besitzen eine profilförmige Ausbildung, die eine lösbare Steckverbindung des Teppichbodenbelageselementes mit einem entsprechend ausgebildeten Teppichbodenbelagselement ermöglicht. Das Teppichbodenbelagselement kann im Verbund mit anderen, entsprechend ausgebildeten Teppichbodenbelagselementen ohne größere Vorarbeiten auf dem betreffenden Unterboden zur Herstellung des Teppichbodenbelags zum Beispiel in einem Wohnraum verlegt werden.

## Beschreibung

Die Erfindung betrifft ein Teppichbodenbelagselement. Teppichbodenbeläge sind allgemein bekannt und in großer Auswahl im Handel erhältlich. Zu Teppichbodenbelägen zählen auch Teppichbodenbelagselemente. Dies sind zum Beispiel Teppichbodenfliesen, das heißt textile Fußbodenbeläge, die in bestimmten kleinformatigen Flächenformen geliefert werden und dafür vorgesehen sind, auf Fußböden in abgeschlossenen Räumen oder im Freien, die von Menschen begangen werden, oder auf für derartige Fußböden entsprechend vorbereitete Unterböden gelegt zu werden.

Um handelsübliche Teppichbodenbeläge fachgerecht zu verlegen, muß zuerst der Unterboden entsprechend vorbereitet werden. Dazu ist es erforderlich, daß zum Beispiel ein Estrich üblicherweise - je nach Typ und Zustand - an- bzw. abgeschliffen oder sogar abgefräst, grundiert und gespachtelt wird. Anschließend wird der Teppichbodenbelag am Unterboden befestigt. Dies kann beispielsweise durch Verwendung einer klebrigen Substanz geschehen. Diese Verlegearbeiten sind überaus zeitaufwendig und verursachen verhältnismäßig viel Schmutz. Hinzu kommt, daß sich ein durch Kleben befestigter Teppichbodenbelag nur schwer wieder entfernen läßt und dann praktisch nicht mehr gebraucht werden kann.

Um daher Teppichbodenbeläge nach ihrer Nutzung leichter entfernbar zu machen und die Verlege- bzw. Renovierungskosten zu reduzieren, werden im Handel sogenannte "schwerbeschichtete" Teppichfliesenelemente angeboten. Diese Teppichfliesenelemente werden üblicherweise mit Bitumen, PVC (Polyvinylchlorid), EVA (Ethylenvinylacetat) oder anderen geeigneten Materialien "schwerbeschichtet", damit sie infolge ihrer Gewichtskraft eine gute Bodenhaftung haben. Jedoch müssen auch bei der Verlegung solcher Teppichfliesenelemente die technischen Vorschriften betreffend die Beschaffenheit des Unterbodens (An- bzw. Abschleifen, Grundieren, Spachteln) weitestgehend eingehalten werden. Auch ein zumindest leichter Kleberfilm auf dem Unterboden ist nötig, um die auftretenden Scherkräfte (Horizontalkräfte) nach Möglichkeit aufzufangen, da sich die Teppichfliesenelemente ansonsten bei Belastung (zum Beispiel Rollen eines Stuhls oder eines Transportwagens) verschieben oder sogar vom Unterboden ablösen.

Der vorliegenden Erfindung liegt daher die Aufgabe zugrunde, ein Teppichbodenbelagselement zu schaffen, bei der die vorgenannten Nachteile bekannter Teppichbodenbeläge, einschließlich solcher in Fliesenform, vermieden werden und das folglich eine schnellere und kostengünstigere Verlegung ermöglicht.

Gelöst wird diese Aufgabe bei einem Teppichbodenbelagselement der in Frage stehenden Art erfindungsgemäß dadurch, daß es eine im wesentlichen rechteckförmige Trägerplatte besitzt, an deren Oberseite eine entsprechend bemessene Teppichware befestigt ist, und wenigstens zwei parallel gegenüberliegende Seitenränder der Trägerplatte eine profilförmige Ausbildung besitzen, die eine lösbare Steckverbindung des Teppichbodenbelagselementes mit einem entsprechend ausgebildeten Teppichbodenbelagselement ermöglicht.

Das erfindungsgemäße Teppichbodenbelagselement hat den Vorteil, daß es im Verbund mit anderen, entsprechend ausgebildeten Teppichbodenbelagselemeneten ohne größere Vorarbeiten sofort auf dem betreffenden Unterboden zur Herstellung des Teppichbodenbelags zum Beispiel in einem Wohnraum verlegt werden kann. Es entfallen die bisher erforderlichen Schleif-, Grundierungs- und Spachtelarbeiten zur fachgerechten Vorbereitung des Estrichs oder eines sonstigen Unterbodens. Der Verleger muß die vorgenannten handwerklichen Arbeiten also nicht durchführen und spart so Zeit für andere Tätigkeiten. Außerdem lassen sich die sonst bei fachmännischer Verlegung von Teppichbodenbelägen zu verarbeitenden Materialien, das heißt vor allem Grundierungs-, Spachtel-, Ausgleichs- und Nivelliermassen sowie Klebstoffe, einsparen. Damit fällt die Disponierung dieser Materialien ebenso weg wie die entsprechenden Lagerräume sowie Lager- und Transportkosten.

Die "Trocken"-Verlegung der erfindungsgemäßen Teppichbodenbelagselemente ohne Kleber bzw. Leim geht entsprechend einfach und schnell (Zeitersparnis circa 50 %), und sowohl bei der Neuverlegung als auch bei der Renovierung entstehen relativ wenig Lärm und Schmutz. Zudem können die Teppichbodenbelagselemente ohne jeglichen Qualitätsverlust auf bereits vorhandene, auch andersartige Bodenbeläge verlegt werden, ohne daß diese beschädigt werden. Auch ein spätere Demontage der einzelnen Teppichbodenbelagselemente ist problemlos möglich.

Die Herstellung eines erfindungsgemäßen Teppichbodenbelagselementes kann beispielsweise so erfolgen, daß auf die fertig hergestellte und mit profilierten Seitenrändern versehene Trägerplatte ein entsprechend zugeschnittenes Teppichbodenstück aufgeklebt wird. Dieses Teppichbodenstück muß keine Rückenbeschichtung aufweisen.

Es ist klar, daß sich die erfindungsgemäße Lösung nicht nur mit Teppichware, sondern auch mit anderen textilen Fußbodenbelagsmaterialien verwirklichen läßt.

Gemäß einer ersten Ausführungsform des erfindungsgemäßen Teppichbodenbelagselementes besitzen die Seitenränder der Trägerplatte eine profilförmige Ausbildung, die eine Nut-Feder-Steckverbindung zweier Teppichbodenbelagselemente ermöglicht. Steckverbindungen nach dem Nut-Feder-Prinzip sind als solche allgemein bekannt. Bei der Steckverbindung zweier Teppichbodenbelagselemente nach dem Nut-Feder-Prinzip können diese waagerecht ineinander gefügt werden. Dies hat den Vorteil, daß die Teppichbodenbelagselemente im Verlegezustand, d.h. bei waagerechter Auflage auf dem Unterboden, verschiebbar sind, was in bestimmten Fällen vorteilhaft sein kann.

Gemäß einer zweiten Ausführungsform des erfindungsgemäßen Teppichbodenbelagselementes besitzen die Seitenränder der Trägerplatte dagegen eine profilförmige Ausbildung, die eine Klick-Steckverbindung zweier Teppichbodenbelagselemente ermöglicht. Klick-Steckverbindungen sind bereits bei Fertigparkett- und Laminatbodenbelägen bekannt. An den parallel gegenüberliegenden Seitenrändern der Trägerplatte des erfindungsgemäßen Teppichbodenbelagselementes sind Profile so ausgebildet, daß es zum Beispiel unter einem Winkel schräg von oben an ein bereits auf dem Unterboden waagerecht liegendes, entsprechend ausgebildetes Teppichbodenbelagselement angesetzt wird und mit diesem durch einen "Klick"-Vorgang zusammengefügt und gewissermaßen verriegelt wird. Dementsprechend werden die weiteren Teppichbodenbelagselemente durch "Klicken" angefügt, bis die gewünschte Unterbodenfläche durch die Teppichbodenbelagselemente vollständig abgedeckt ist.

Vorteilhaft bei einer Klick-Steckverbindung zweier Teppichbodenbelagselemente ist die Tatsache, daß im Verlegezustand derselben wegen der speziellen Profilausbildung keine seitliche Verschiebung möglich ist. Dadurch wird erreicht, daß die Fugen zwischen den einzelnen Teppichbodenbelagselementen sehr dicht sind und ein seitliches Verschieben einzelner Teppichbodenbelagselemente infolge der mechanischen Beanspruchung des Teppichbodenbelags verhindert wird. Gleichwohl lassen sich die Teppichbodenbelagselemente durch die Klick-Steckverbindung problemlos auch durch einen Laien verlegen und später, sofern dies erwünscht ist (zum Beispiel wegen eines Umzuges), ebenso einfach und schnell wieder herausnehmen beziehungsweise demontieren.

In einer bevorzugten Ausführungsform des erfindungsgemäßen Teppichbodenbelagselementes ist vorgesehen, daß die Trägerplatte desselben aus einem dimensionsstabilen Kunststoffmaterial hergestellt ist. Dies hat den Vorteil, daß sich zum Beispiel etwaige Temperatur- und Luftfeuchtigkeitsschwankungen in dem betreffenden Raum nicht nachteilig auf die Liegeeigenschaften des aus den erfindungsgemäßen Teppichbodenbelagselementen zusammengesetzten Teppichbodenbelags auswirken. Vor allem wird so einer unerwünschten Fugenbildung zwischen einzelnen Teppichbodenbelagselementen vorgebeugt, da sich solche Fugen ungünstig auf das äußere Erscheinungsbild der Teppichware und ihres Dessins auswirken können. Ferner ist Kunststoff als Trägerplattenmaterial verhältnismäßig preisgünstig. Es läßt sich zu dem gewünschten Zweck auch gut verarbeiten und ermöglicht auch Trägerplatten geringerer Dicke mit ausreichenden Festigkeitseigenschaften. Dabei kommen auch Kunststoffmaterialien in Betracht, die so elastisch sind, daß zum Beispiel hervorstehende Bereiche der profilförmigen Seitenränder der Trägerplatte nicht so schnell eingedrückt oder sogar abbrechen können. Zu solchen Beschädigungen kann es bekanntlich durch Stöße und dergleichen auch beim Transport der Teppichbodenbelagselemente kommen. Selbst kleine Beschädigungen können jedoch dazu führen, daß die Steckverbindung nicht mehr möglich ist und das Teppichbodenbelagselement somit nicht mehr gebrauchsfähig ist.

Weiterhin wird erfindungsgemäß vorgeschlagen, die Trägerplatte vorzugsweise aus Polystyrol herzustellen. Polystyrol ist ein leicht verarbeitbares und dimensionsstabiles Kunststoffmaterial. Zudem ist es relativ leicht, was sich auch günstig auf die mit einem Transport der Teppichbodenbelagselemente verbundenen Kosten auswirkt.

Gemäß einer weiteren vorteilhaften Ausführungsform des erfindungsgemäßen Teppichbodenbelagselementes ist vorgesehen, daß die Teppichware durch eine Klebeschicht an der Trägerplatte befestigt ist. Dies schließt die Möglichkeit ein, bei der Herstellung des Teppichbodenbelagselementes eine Klebefolie zunächst an der Trägerplatte anzubringen und anschließend die Teppichware daran zu befestigen.

Eine andere Ausführungsform des erfindungsgemäßen Teppichbodenbelagselementes sieht vor, daß es als eine im wesentlichen quadratische Teppichbodenbelagsfliese ausgebildet ist. Die Trägerplatte hat in diesem Fall folglich eine quadratische Form; ein Quadrat ist bekanntlich ein Sonderfall eines Rechtecks, nämlich eines Rechtecks mit vier gleich langen Seiten. Eine solche Teppichbodenbelagsfliese kann zum Beispiel eine Größe von ca. 60 x 60 cm aufweisen und daher der Größe handelsüblicher Teppichbodenbelagsfliesen entsprechen.

Schließlich wird erfindungsgemäß ein Teppichbodenbelagselement vorgeschlagen, bei dem an der Unterseite der Trägerplatte eine Unterbodenausgleichsschicht vorgesehen ist. Das Material der Unterbodenausgleichsschicht kann vorzugsweise ein Filz- oder Vliesmaterial sein. Die Unterbodenausgleichsschicht dient dem Ausgleich kleinerer Ungleichmäßigkeiten bzw. Unebenheiten des Unterbodens und übernimmt zugleich die Funktion einer Trittschalldämpfung.

Die Erfindung wird nachstehend anhand der schematischen Zeichnung näher erläutert. Es zeigen
- Fig. 1: eine Ansicht von oben auf einen Teil eines Teppichbodenbelags, bestehend aus einer Anzahl von Teppichbodenbelagselementen gemäß einer ersten erfindungsgemäßen Ausführungsform,
- Fig. 2: eine Schnittansicht der in Fig. 1 dargestellten Teppichbodenbelagselemente entlang der Linie A-B der Fig. 1 (während des Klick-Verlegevorgangs eines Teppichbodenbelagselementes),
- Fig. 3: eine der Fig. 2 entsprechende Schnittansicht der Teppichbodenbelagselemente (nach Beendigung des Klick-Verlegevorgangs),
- Fig. 4: drei Teppichbodenbelagselemente gemäß einer weiteren erfindungsgemäßen Ausführungsform in einer der Fig. 2 entsprechenden Schnittdarstellung (während des Klick-Verlegevorgangs eines Teppichbodenbelagselementes) und
- Fig. 5: eine der Fig. 4 entsprechende Schnittansicht der Teppichbodenbelagselemente (nach Beendigung des Klick-Verlegevorgangs).

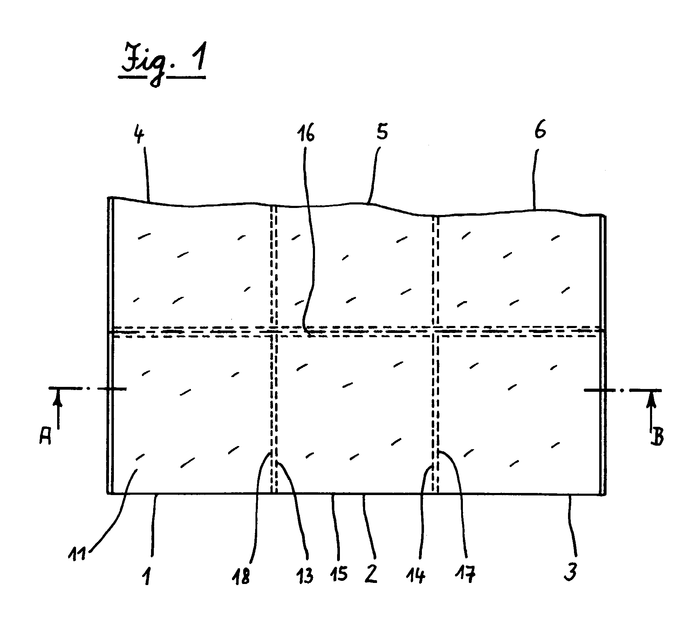

Der in der Fig. 1 gezeigte Teil eines Teppichbodenbelags besteht aus den Teppichbodenbelagselementen 1-6. Dabei liegen die Teppichbodenbelagselemente 1-3 in einer Reihe, während die Teppichbodenbelagselemente 4-6 unmittelbar seitlich daneben und ebenfalls in einer Reihe liegen. Die Teppichbodenbelagselemente 1-6 sind quadratisch und gleich groß sowie in gleicher Weise aufgebaut und ausgebildet.

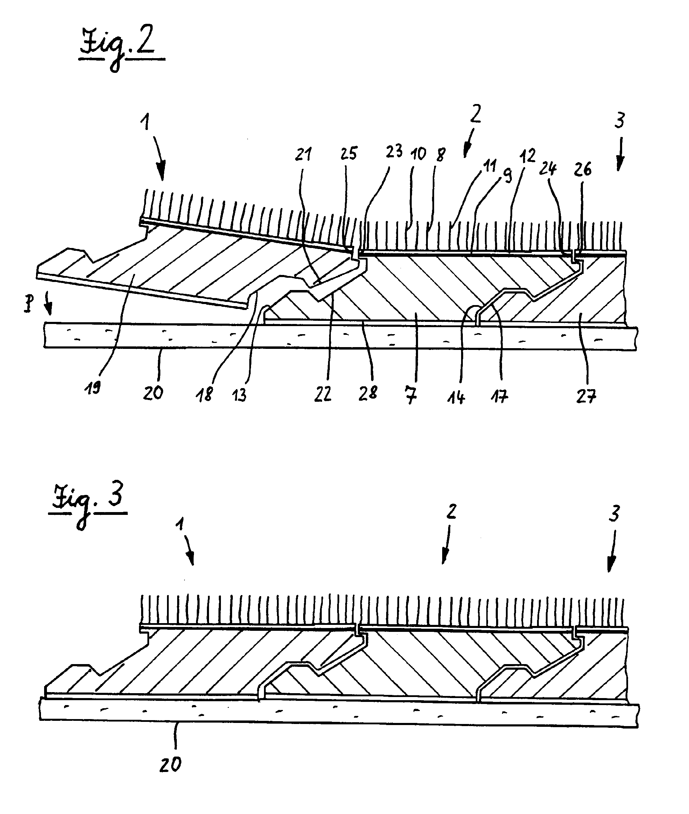

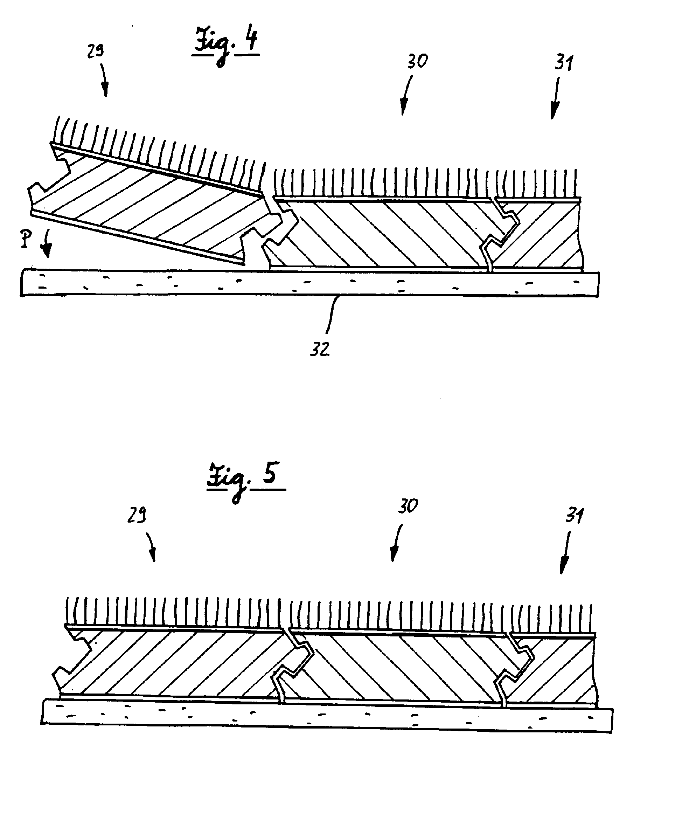

Zur Veranschaulichung des Aufbaus, der Ausbildung und der Verlegetechnik der Teppichbodenbelagselemente 1-6 sind in den Fig. 2 und 3 die Teppichbodenbelagselemente 1-3 im Schnitt dargestellt. So besitzt das Teppichbodenbelagselement 2 zunächst eine aus Polystyrol bestehende Trägerplatte 7 mit quadratischem Grundriß. An der Oberseite der Trägerplatte 7 ist eine der Größe der Trägerplatte 7 entsprechend bemessene Teppichware 8 befestigt. Die Teppichware 8 ist durch eine Klebeschicht 9 an der Trägerplatte 7 befestigt. Die Teppichware 8 weist eine veloursartige Oberseite mit aufgeschnittenen Polfäden 10 auf, die insgesamt eine Florschicht 11 an der Oberseite der Teppichware 8 bilden. Statt dessen könnte auch eine schlingenartige Oberseite vorhanden sein. Der Oberseite der Teppichware 8 liegt deren unbeschichtete Unterseite 12 gegenüber.

Des weiteren hat die Trägerplatte 7 vier gleich lange Seitenränder 13, 14, 15 und 16, wobei die Seitenränder 13 und 14 sowie die Seitenränder 15 und 16 jeweils parallel gegenüberliegen. Während die Seitenränder 15 und 16 der Trägerplatte 7 in diesem Ausführungsbeispiel glatt ausgeführt sind, besitzen die Seitenränder 13 und 14 jeweils eine profilförmige Ausbildung. Der Querschnitt dieses speziellen Profils ist in den Fig. 2 und 3 zu erkennen. Da die Teppichbodenbelagselemente 1-3 auch hinsichtlich des Profilquerschnitts der Seitenränder 13-14 ihrer Trägerplatten 7 gleich sind, paßt der in Fig. 2 rechts befindliche Seitenrand 14 der Trägerplatte 7 des Teppichbodenbelagselements 2 formschlüssig in den im Verlegezustand benachbarten Seitenrand 17 der Trägerplatte 27 des Teppichbodenbelagselementes 3. Auf der gegenüberliegenden Seite paßt der in Fig. 2 links gelegene Seitenrand 13 der Trägerplatte 7 des Teppichbodenbelagselementes 2 formschlüssig in den Seitenrand 18 der Trägerplatte 19 des Teppichbodenbelagselementes 1.

Nachfolgend soll das Vorgehen bei einer leimlosen Verlegung der Teppichbodenbelagselemente 1-3 erläutert werden. Hierzu zeigt Fig. 2 den Zustand, bei dem bereits die Teppichbodenbelagselemente 2 und 3 miteinander verbunden sind und waagerecht auf dem Unterboden 20 liegen. Die Verbindung der Teppichbodenbelagselemente 2 und 3 ist eine Klick-Steckverbindung. Um die Herstellung einer solchen Klick-Steckverbindung zu zeigen, ist in Fig. 2 der Moment gezeigt, in dem das Teppichbodenbelagselement 1 unter einem Winkel schräg von oben an das Teppichbodenbelagselement 2 von dem Verleger angesetzt wird. In dem in Fig. 2 dargestellten Moment befindet sich der Profilvorsprung 21 des Seitenrandes 18 der Trägerplatte 19 des Teppichbodenbelagselementes 1 bereits ein Stück weit in der Profilnut 22 des Seitenrandes 13 der Trägerplatte 7 des Teppichbodenbelagselementes 2. Wenn der Verleger nun das Teppichbodenbelagselement 1 in Richtung des Unterbodens 18 drückt, was in Fig. 2 durch den mit dem Buchstaben "P" bezeichneten Pfeil angedeutet ist, paßt sich der Seitenrand 18 des Teppichbodenbelagselementes 1 schließlich in den profilierten Seitenrand 13 des Teppichbodenbelagselementes 2 ganz ein (Fig. 3). Dieser Einpaß- bzw. Steckverbindungsvorgang kann auch kurz als "Klicken" bezeichnet werden. Durch die spezielle Profilquerschnittsform der Seitenränder 13 und 18 mit dem Profilvorsprung 21 und der Profilnut 22 sowie deren geometrischen Abmessungen führt die Klick-Steckverbindung dazu, daß sich die Teppichbodenbelagselemente 1 und 2 und in analoger Weise die Teppichbodenbelagselemente 2 und 3 nicht mehr seitlich verschieben lassen, wenn sich diese im endgültigen Verlegezustand, das heißt in waagerechter Lage auf dem Unterboden 20 befinden. Die Teppichbodenbelagselemente 1-3 sind dann sozusagen verhakt bzw. verriegelt.

Fig. 3 zeigt den Zustand, nachdem das Teppichbodenbelagselement 1 in das Teppichbodenbelagselement 2 vollständig "eingeklickt" worden ist. Es ist zu erkennen, daß die jeweils benachbarten Seitenrändern 13 und 18 bzw. 14 und 17 der Teppichbodenbelagselemente 1-3 dann dicht aneinanderliegen, so daß auch die nach oben weisenden Seitenkanten 23 und 24 des Teppichbodenbelagselementes 2 an die Seitenkante 25 an dem nach oben weisenden Ende der Trägerplatte 19 des Teppichbodenbelagselementes 1 bzw. an die Seitenkante 26 an dem nach oben weisenden Ende der Trägerplatte 27 des Teppichbodenbelagselementes 3 stoßen. Auf diese Weise nimmt ein Betrachter die Teppichware 8 beziehungsweise die Florschicht 11 der Teppichbodenbelagselemente 1-6 von oben als Einheit wahr und kann nicht erkennen, daß der Teppichbodenbelag aus den einzelnen Teppichbodenbelagselementen 1-6 zusammengesetzt ist.

Hinsichtlich eines geeigneten Profilquerschnitts der Seitenränder 13, 14 und 17, 18 ist zu sagen, daß dieser so gewählt sein muß, daß der vorgenannte und aus Fig. 2 ersichtliche Anstellwinkel nicht zu groß ist. Denn ansonsten besteht die Gefahr, daß sich die Polfäden 10 der Florschicht 11 im Bereich der Seitenränder 13, 14 und 17, 18 so sehr berühren, daß sie zum Beispiel seitlich weggedrückt bzw. geknickt werden. Diese Beeinträchtigung kann dazu führen, daß ein Betrachter von oben die Florschicht im Bereich der Stoßfugen der Teppichbodenbelagselemente nicht mehr als Einheit, das heißt nicht mehr als eine durchgehend erscheinende Florschicht wahrnimmt. Darüber hinaus besteht die Gefahr, daß sogar Beschädigungen der Polfäden 10 verursacht werden.

Zum Ausgleich von Unebenheiten auf dem Unterboden 20 und auch zur Erreichung einer gewissen Trittschalldämpfung weist das Teppichbodenbelagselement 2 schließlich als Unterbodenausgleichsschicht ein leichtes Nadelvlies 28 an der Unterseite der Trägerplatte 7 auf. Entsprechendes gilt für die Teppichbodenbelagselemente 1 und 3.

Der Fig. 1 ist zu entnehmen, daß seitlich neben der Reihe mit den Teppichbodenbelagselementen 1-3 die Reihe mit den Teppichbodenbelagselementen 4-6 verlegt ist. Die Ausbildung und Verlegeweise der Teppichbodenbelagselemente 4-6 entspricht dem Aufbau und der Verlegeweise der Teppichbodenbelagselemente 1-3, so daß dies nicht näher erläutert werden braucht. In dem vorliegenden Ausführungsbeispiel ist vorgesehen, daß die jeweils seitlich benachbarten Teppichbodenbelagselemente 1 und 4, 2 und 5 sowie 3 und 6 lediglich auf Stoß, das heißt ohne besondere Verbindungsmittel aneinanderliegen. Dies ermöglicht es, im Bedarfsfalle eine Reihe von Teppichbodenbelagselementen 1-3 oder 4-6 zumindest teilweise zu entfernen, um zum Beispiel darunter befindliche Versorgungseinrichtungen zu erreichen. Dies ist insbesondere dann von Interesse, wenn die Teppichbodenbelagselemente 1-3 bzw. 4-6 auf einer Doppelbodenkonstruktion verlegt werden. Eine solche an sich bekannte Doppelbodenkonstruktion kann Versorgungsleitungen wie zum Beispiel Telefon- und Stromkabel, Wasser- und Heizungsrohre etc. sowie Teile einer Raumbelüftungseinrichtung aufnehmen. In diesem Zusammenhang sei die Möglichkeit erwähnt, ein erfindungsgemäßes Teppichbodenbelagselement mit Löchern zu versehen, die sich durch dessen gesamte Trägerplatte erstrecken und es erlauben, daß zu Belüftungs- bzw. Klimatisierungszwecken Luft über Leitungen in einer darunter befindlichen Doppelbodenkonstruktion nach oben zuerst durch über die ganze Fläche der oberen Doppelbodenplatte verteilte Luftaustrittsöffnungen und danach durch die Löcher des Teppichbodenbelagselementes in den Raum gelangt.

Erfindungsgemäß ist es auch möglich, daß die seitlich benachbarten Teppichbodenbelagselemente 1 und 4, 2 und 5 sowie 3 und 6 zusätzlich fixiert werden. Dies kann zum Beispiel durch eine waagerechte Nut-Feder-Steckverbindung ihrer Seitenränder geschehen. Anstelle einer solchen Nut-Feder-Steckverbindung ist dort aber auch eine Klick-Steckverbindung realisierbar.

In den Fig. 4 und 5 sind jeweils drei Teppichbodenbelagselemente 29-31 gezeigt. Sie sind auf einem Unterboden 32 verlegt und stimmen hinsichtlich ihres Aufbaus, ihrer Ausbildung und ihrer Verlegeweise mit den Teppichbodenbelagselementen 1-3 überein. Sie unterscheiden sich von den Teppichbodenbelagselementen 1-3 nur dadurch, daß die Seitenränder ihrer Trägerplatten einen anderen günstigen Profilquerschnitt haben. Der in Fig. 4 mit dem Buchstaben "P" bezeichnete Pfeil zeigt (wie bei Fig. 2) die Richtung an, in die das Teppichbodenbelagselement 29 während des Klick-Steckvorgangs auf den Unterboden 32 und in das Teppichbodenbelagselement 30 gedrückt wird. Der Zustand nach Beendigung dieses Klickens ist in der Fig. 5 zu erkennen.

## Patentansprüche

1. Teppichbodenbelagselement,
**dadurch gekennzeichnet,**
**daß** es eine im wesentlichen rechteckförmige Trägerplatte (7, 19, 27) besitzt, an deren Oberseite eine entsprechend bemessene Teppichware (8) befestigt ist, und wenigstens zwei parallel gegenüberliegende Seitenränder (13-18) der Trägerplatte (7, 19, 27) eine profilförmige Ausbildung besitzen, die eine lösbare Steckverbindung des Teppichbodenbelagselementes (1-6, 29-31) mit einem entsprechend ausgebildeten Teppichbodenbelagselement (1-6, 29-31) ermöglicht.

2. Teppichbodenbelagselement nach Anspruch 1, **dadurch gekennzeichnet, daß** die Seitenränder der Trägerplatte eine profilförmige Ausbildung besitzen, die eine Nut-Feder-Steckverbindung zweier Teppichbodenbelagselemente ermöglicht.

3. Teppichbodenbelagselement nach Anspruch 1, **dadurch gekennzeichnet, daß** die Seitenränder (13, 14, 17, 18) der Trägerplatte (7, 19, 27) eine profilförmige Ausbildung besitzen, die eine Klick-Steckverbindung zweier Teppichbodenbelagselemente (1-3, 29-31) ermöglicht.

4. Teppichbodenbelagselement nach einem der Ansprüche 1 bis 3, **dadurch gekennzeichnet, daß** die Trägerplatte (7, 19, 27) aus einem dimensionsstabilen Kunststoffmaterial hergestellt ist.

5. Teppichbodenbelagselement nach Anspruch 4, **dadurch gekennzeichnet, daß** die Trägerplatte (7, 19, 27) aus Polystyrol hergestellt ist.

6. Teppichbodenbelagselement nach einem der Ansprüche 1 bis 5, **dadurch gekennzeichnet, daß** die Teppichware (8) durch eine Klebeschicht (9) an der Trägerplatte (7, 19, 27) befestigt ist.

7. Teppichbodenbelagselement nach einem der Ansprüche 1 bis 6, **dadurch gekennzeichnet, daß** es als eine im wesentlichen quadratische Teppichbodenbelagsfliese (1-3, 29-31) ausgebildet ist.

8. Teppichbodenbelagselement nach einem der Ansprüche 1 bis 7, **dadurch gekennzeichnet, daß** an der Unterseite der Trägerplatte (7, 19, 27) eine Unterbodenausgleichschicht (28) vorgesehen ist.

9. Teppichbodenbelagselement nach Anspruch 8, **dadurch gekennzeichnet, daß** die Unterbodenausgleichsschicht (28) aus einem Filz- oder Vliesmaterial besteht.
